# EUROPÄISCHE PATENTSCHRIFT

(11) **EP 3 392 525 B1**
(45) Veröffentlichungstag und Bekanntmachung des Hinweises auf die Patenterteilung: **09.03.2022**
(21) Anmeldenummer: 17167600.0
(22) Anmeldetag: 21.04.2017
(51) Int. Cl.: F16G 15/02, B66C 1/12

(54) **AUFHÄNGERING FÜR MEHRSTRANGGEHÄNGE**
HANGING RING FOR MULTI-STRAND HANGERS
ANNEAU DE SUSPENSION POUR JEUX DE LEVAGE À PLUSIEURS BRINS

(43) Veröffentlichungstag der Anmeldung: 24.10.2018
(73) Patentinhaber: Pewag Austria GmbH, 8605 Kapfenberg (AT)
(72) Erfinder: OSWALD, Bernhard, 8605 Kapfenberg (AT); KOHLHUBER, Christian, 8623 Aflenz (AT)
(74) Vertreter: Patentanwälte Geyer, Fehners & Partner mbB

(56) Entgegenhaltungen:
- EP-A1- 0 331 069
- DE-C1- 3 800 685
- US-S1- D 661 862
- Anderson-Images.com: "Lightweight Paragliding Carabiner: AustriAlpin Stratus", You Tube, 27. Mai 2014 (2014-05-27), Seiten 1-2, XP054977841, Gefunden im Internet: URL:https://www.youtube.com/watch?v=NRd1ll opV78 [gefunden am 2017-10-30]

## Beschreibung

Die Erfindung bezieht sich auf einen Aufhängering für Mehrstranggehänge, der zwei parallele geradlinige Schenkel umfaßt, die an ihren jeweiligen Enden durch bogenförmige Verbindungsschenkel miteinander verbunden sind, wobei der untere Verbindungsschenkel zur Längsmittellinie des Aufhängeringes symmetrisch ausgebildet ist und er im Mittelbereich seiner Erstreckung sowie in den beiden Bereichen seiner Einmündungen in jeden der beiden Schenkel kreisabschnittsförmig gerundet verläuft.

Ein Aufhängering dieser Art ist aus der US 2008/0315604 A1 bekannt, bei dem die zwei parallelen geradlinigen Schenkel durch halbkreisförmige Bögen als Verbindungsschenkel miteinander verbunden sind. Dabei positionieren sich die Kettenstränge in dieser Rundung des Verbindungsschenkels entsprechend den Neigungswinkel am Umfang von 0° bis 60°. Dabei kann der Anwender nur relativ schwer den Neigungswinkel feststellen, um die Tragfähigkeit eines Gehänges richtig einzuschätzen.

Bei dem Aufhängering für Mehrstranggehänge, wie er in der US D661,862 S gezeigt ist, sind die Verbindungsschenkel nicht mehr halbkreisförmig ausgebildet, sondern mit einem größeren Rundungsradius versehen, wodurch eine bessere Anpassung an die relativ flachen Kranhaken erreicht wird und es dadurch zu einer flächigeren Anpassung zwischen der Rundung des Verbindungsschenkels und dem Kranhaken kommt, wodurch der Verschleiß von Haken und Ring reduziert werden kann. Die Schwierigkeit zur Bestimmung des Neigungswinkels und zur Einschätzung der Tragfähigkeit eines Gehänges wird dabei aber nicht verbessert.

Die Angabe der Tragfähigkeit erfolgt bei Mehrstranggehängen in Abhängigkeit vom Winkel der Stränge zu einer senkrecht oder waagrecht gedachten Linie oder von dem Winkel, den die Stränge zueinander einschließen. Im Rahmen der vorliegenden Beschreibung wird stets auf den Winkel abgestellt, den die Stränge zu einer gedachten senkrechten Linie einschließen und der kurz als "Neigungswinkel" bezeichnet wird. Grundsätzlich setzt sich die Tragfähigkeit eines Gehänges aus den Tragfähigkeiten der einzelnen Kettenstränge in Abhängigkeit vom Neigungswinkel zusammen. Dabei können Neigungswinkel 0° bis 60° betragen. Neigungswinkel über 60° werden grundsätzlich nicht zugelassen. Dabei ist es für den Anwender relativ schwer, den Neigungswinkel genau oder einigermaßen genau zu erkennen und damit die Tragfähigkeit eines Gehänges richtig einzuschätzen.

Für allgemeine Hebevorgänge wird der Winkelbereich normativ von 0° bis 60° in zwei Bereiche unterteilt, welchen die niedrigste mögliche Tragfähigkeit des jeweiligen Bereiches zugeordnet wird. So wird z. B. dem Winkelbereich 0° bis 45° die Tragfähigkeit von 45° zugeordnet und dem Winkelbereich 45° bis 60° die Tragfähigkeit von 60°. Aber auch mit diesen Unterteilungen ist es für den Anwender nicht einfach, mit guter Sicherheit den Neigungswinkelbereich zu bestimmen.

Ausgehend hiervon stellt die Erfindung darauf ab, einen Aufhängering für Mehrstranggehänge vorzuschlagen, bei dem die Tragfähigkeit des Gehänges in Abhängigkeit vom Neigungswinkel für den Anwender leichter zu erkennen ist.

Erfindungsgemäß wird dies bei einem Aufhängering der eingangs genannten Art dadurch erreicht, daß die Rundungen auf der Innenseite des Aufhängeringes kleiner als die halbe Innenweite des Aufhängeringes, jedoch größer als der halbe Durchmesser der Schenkel sind, und daß der kreisabschnittförmige Mittelbereich des Verbindungsschenkels an jedem seiner Enden mit der kreisabschnittförmigen Einmündung in den benachbarten Schenkel über einen geradlinig verlaufenden Zwischenabschnitt des Verbindungsschenkels verbunden ist, der unter einem Winkel im Bereich von 50° bis 75° zur Längsmittellinie des Aufhängeringes angestellt ist.

Während bei Aufhängeringen nach dem Stand der Technik sich die Kettenstränge in der Rundung der Verbindungsschenkel entsprechend dem Neigungswinkel am Umfang von 0° bis 60° positionieren, bietet gegenüber dem Stand der Technik die Erfindung hier den Vorteil, daß die Position der Kettenstränge im Aufhängering auf im Wesentlichen zwei Bereiche beschränkt wird, die optisch einfacher und gut voneinander zu unterscheiden sind und denen jeweils eine Tragfähigkeit zugeordnet werden kann. Befinden sich die Stränge im oder nahe am Mittelbereich des Verbindungsschenkels, entspricht die Tragfähigkeit dem Bereich von 0° bis 45°. Befinden sich die Stränge hingegen weiter außen, nämlich im Bereich des Übergangs zu beiden Schenkeln, entspricht die Tragfähigkeit dem Bereich 45° bis 60°. Dies wird dadurch erreicht, daß die erfindungsgemäß eingesetzten geradlinig verlaufenden Zwischenabschnitte an jedem Verbindungsschenkel durch ihre Winkellage die Neigungswinkelbereiche 0° bis 45° und 45° bis 60° örtlich voneinander trennen. Dabei sind die Anstellwinkel der geraden Segmente des Aufhängeringes so gewählt, daß der Ketten- bzw. Seilstrang unter Belastung jeweils in einen der beiden aufgezeigten Winkelbereiche wechselt und sich dort positioniert.

Durch die erfindungsgemäße Ausbildung des Aufhängeringes ergibt sich auch ein guter Kontakt zwischen dem Kranhaken und dem Aufhängering am oberen Verbindungsschenkel, wobei eine vorteilhafte Ausbildung darin besteht, daß der obere Verbindungsschenkel, der mit dem Kranhaken verbunden wird, speziell an letzteren angepaßt ist.

In besonderes vorteilhafter Ausgestaltung des erfindungsgemäßen Aufhängeringes ist bei diesem der Radius der Rundung im Mittelbereich des Verbindungsschenkels 2,5-mal größer als der halbe Durchmesser der Schenkel des Aufhängeringes, wodurch anhand der Stellung der eingehängten B-Glieder der Neigungswinkelbereich der jeweiligen Stranggehänge rasch und gut feststellbar ist.

Gleichermaßen kann es aber auch von Vorteil sein, die Radien der kreisabschnittförmigen Rundungen im Mittelbereich des Verbindungsschenkels und in den Bereichen seiner Einmündungen in die Schenkel des Aufhängeringes gleich groß auszubilden.

Vorzugsweise münden bei der Erfindung die gerundeten Bereiche des unteren Verbindungsschenkels, in den die Mehrstranggehänge eingehängt sind, in einen sich anschließenden geradlinigen Abschnitt jeweils tangential ein. Hierdurch lassen sich bei Verschwenkbewegungen der eingehängten Mehrstranggehänge stoßfreie Übergänge zwischen den jeweils nebeneinander liegenden Bereichen des Verbindungsschenkels erzielen.

Eine ganz besonders günstige Ausgestaltung der Erfindung wird auch damit erreicht, daß jeder geradlinige Zwischenabschnitt des unteren Verbindungsschenkels unter einem Anstellwinkel von 60° zur Längsmittellinie des Aufhängeringes geneigt ist, wodurch sich ebenfalls eine sehr gute Erkennbarkeit des Neigungswinkelbereiches der Stellung der eingehängten B-Glieder eines Stranggehänges durch den Benutzer erreichen läßt.

Von besonderem Vorteil ist es bei dem erfindungsgemäßen Aufhängering auch noch, wenn der bogenförmige Verbindungsschenkel in seiner gesamten Erstreckungslänge zusätzlich noch gefräst wird, wodurch sich eine besonders genaue Ausführung des Überganges zwischen den Kreissegmenten und den geraden Abschnitten des Verbindungsschenkels und damit eine sehr genaue Ausführung der Position der montierten Stränge erreichen läßt.

Die Erfindung wird nachfolgend anhand der Figuren im Prinzip beispielshalber noch näher erläutert. Es zeigen:

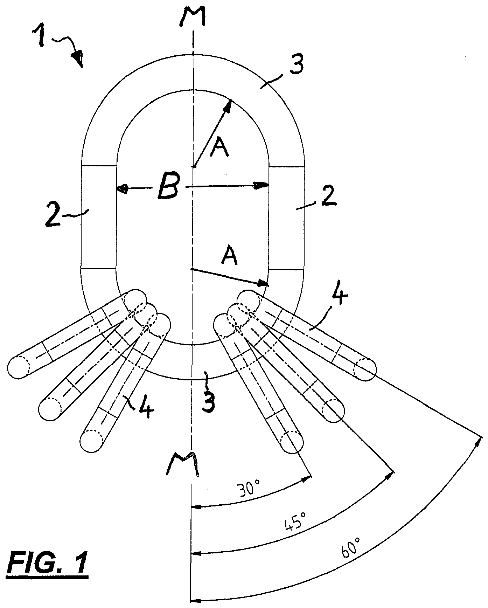

- Fig. 1: eine Draufsicht auf einen Aufhängering nach dem Stand der Technik, mit halbkreisförmig gerundeten Verbindungsschenkeln zwischen den parallelen geradlinigen Schenkeln des Aufhängeringes, wobei an einem Verbindungsschenkel, beidseits der Längs-Mittellinie des Aufhängeringes, jeweils ein eingehängtes B-Kettenglied eines Kettengehänges in drei unterschiedlichen Neigungswinkel-Lagen dargestellt ist;

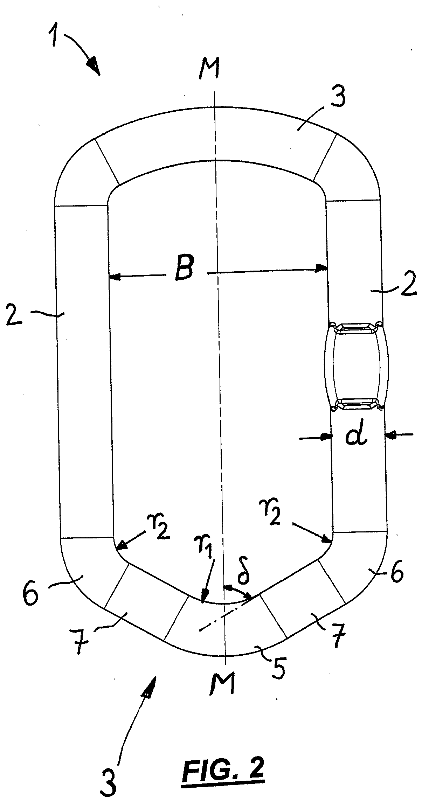

- Fig. 2: eine Draufsicht auf einen erfindungsgemäßen Aufhängering, und

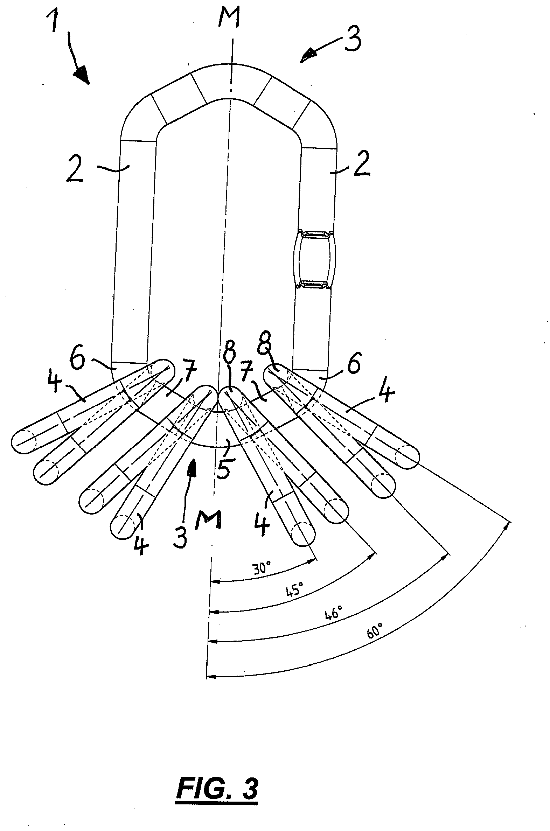

- Fig. 3: eine Draufsicht auf einen erfindungsgemäßen Aufhängering, an dessen unterem Verbindungsschenkel, jeweils wiederum beidseits der Längs-Mittellinie, ein eingehängtes B-Kettenglied eines Kettengehänges in zwei Lagen positioniert dargestellt ist, wobei es in jeder derselben noch einmal in zwei Winkellagen eingezeichnet ist.

In Fig. 1 ist ein Aufhängering 1 nach dem Stand der Technik dargestellt, der zwei seitliche geradlinige und zueinander parallele Schenkel 2 aufweist, die miteinander an jedem ihrer Enden über einen bogenförmigen Verbindungsschenkel 3 miteinander verbunden sind. Die Verbindungsschenkel 3 bei diesem bekannten Aufhängering 1 sind halbkreisförmig ausgebildet, wobei der Krümmungsradium Ajedes bogenförmigen Verbindungsschenkels 3, gesehen an der Innenöffnung des Aufhängeringes 1, der halben Innenbreite ***B*** zwischen den beiden parallelen geradlinigen Schenkeln 2 entspricht, so daß gilt: A = B/2.

Wie Fig. 1 zeigt, ist die Gestaltung des Aufhängeringes 1 symmetrisch zu dessen Längsmittellinie ***M* - M.**

Betrachtet man den Verbindungsschenkel 3, an dem, auf jeder der beiden Seiten der Längsmittellinie ***M* - M,** jeweils ein B-Glied eines angeschlossenen Kettenstranges (in der Figur nicht dargestellt) in drei verschiedenen Neigungswinkel-Lagen dargestellt ist, nämlich jeweils unter 30°, 45° und 60°, dann sei dieser Verbindungsschenkel 3 des Aufhängeringes 1, an den ein Kettenstrang oder mehrere Kettenstränge angeschlossen sind, hier (und im Folgenden) als "unterer Verbindungsschenkel" bezeichnet, da er im Betriebszustand stets nach unten weist, während der zweite Verbindungsschenkel 3, an dem ein Kranhaken angreift, stets nach oben gerichtet ist.

Die Darstellung der Fig. 1 zeigt, daß bei diesem Aufhängering 1 gemäß dem Stand der Technik mit den halbkreisförmigen Verbindungsschenkeln 3 sich jeder angeschlossene Kettenstrang (in Fig. 1 dargestellt mit seinem letzten, in den Aufhängering 1 eingehängten B-Glied) entsprechend dem jeweiligen Neigungswinkel in der halbkreisförmigen Rundung des unteren Verbindungsschenkels 3 selbsttätig positioniert. Dabei nimmt er in jedem Neigungswinkel eine andere Position am unteren Verbindungsschenkel 3 ein, weshalb es für einen Anwender grundsätzlich schwierig ist, aus einem Neigungswinkel, den ein B-Glied 4 am unteren Verbindungsschenkel 3 eingenommen hat, ausreichend richtig zu erkennen, um welchen Neigungswinkel es sich dabei handelt, um mit guter Sicherheit den jeweiligen Neigungswinkelbereich genau oder einigermaßen genau zu erkennen und damit die Tragfähigkeit des Gehänges richtig einzuschätzen.

Die Darstellung von Fig. 2 zeigt nun die Draufsicht auf einen Aufhängering gemäß der Erfindung, der ebenfalls die beiden geradlinigen und zueinander parallelen seitlichen Schenkel 2 aufweist, die an ihren Enden jeweils über einen Verbindungsschenkel 3 miteinander verbunden sind. Der untere Verbindungsschenkel 3 ist nun aber nicht mehr, wie bei dem Aufhängering 1 aus Fig. 1, halbkreisförmig ausgebildet, sondern er ist im Mittelbereich 5 seiner Erstreckung sowie an beiden seitlichen Bereichen 6 seiner Einmündungen in jeden der beiden geradlinigen Schenkel 2 jeweils kreisabschnittförmig gerundet ausgebildet, wobei der gerundete Mittelbereich 5 mit den ebenfalls gerundet ausgebildeten Einmündebereichen 6 an den geradlinigen Schenkeln 2 jeweils über einen geradlinigen Zwischenbereich 7 des unteren Verbindungsschenkels 3 verbunden ist.

Dabei gilt für die Größe der Radien r₁ sowie r₂, welche die jeweils kreisabschnittförmige Rundung der Bereiche 5 bzw. 6 bestimmen, daß diese jeweils kleiner als die halbe Innenweite **B** des Aufhängeringes 1 zwischen den beiden geradlinigen Schenkeln 2, aber größer als der halbe Durchmesser ***d*** eines Schenkels 2 (oder auch des Verbindungsschenkels 3) ist, also r₁, r₂ < B/2 sowie r₁, r₂ > d/2. Ziel ist es, die Radien so klein zu gestalten, damit die geradlinigen Zwischenbereiche möglichst lang sind, um eine gut sichtbare Trennung zwischen den beiden Winkelbereichen zu erreichen. Andererseits dürfen die Radien nicht zu klein sein, um Kerbwirkungen zu vermeiden.

Fig. 3 zeigt den Aufhängering 1 gemäß Fig. 2, wobei hier am unteren Verbindungsschenkel 3 ein B-Glied 4 eines Kettengehänges angebracht ist. Dabei ist dieses B-Glied 4 am unteren Verbindungsschenkel 3 zu beiden Seiten der Längsmittellinie ***M-M*** in jeweils zwei Stellungen eingezeichnet, und dabei in jeder Stellung ihrerseits in zwei Ausrichtungen, nämlich in einer Stellung mit den Neigungswinkeln 30° und 45° sowie in einer weiteren außenliegenden Stellung mit einem Neigungswinkel von 46° und einem Neigungswinkel von 60°. Diese Stellungen sind auf beiden Seiten der Längsmittellinie **M-M** eingezeichnet.

Schließt das Glied 4 und der an diesem hängende Kettenstrang (nicht dargestellt) einen Neigungswinkel von 30° zur senkrecht verlaufenden Längsmittellinie **M-M** ein, dann liegt das Glied 4 auf deren Innenseite des unteren Verbindungsschenkels 3 in dessen kreisabschnittförmigem Mittelbereich 5 mit einem Schenkel 8 an, und zwar in der Ausrichtung 30°, wie aus Fig. 3 ersichtlich.

Bei einem Neigungswinkel von 45° tritt eine Ausrichtung des Kettengliedes 4 ein, wie sie in Fig. 3 unter der Angabe 45° dargestellt ist, wobei das Glied 4 mit seinem sich am Verbindungsschenkel 3 abstützenden Schenkel 8 in derselben Lage wie bei Einnahme des Neigungswinkels 30° verbleibt.

Wird der Neigungswinkel des Kettengliedes 4 jedoch größer als 45°, etwa 46° (oder mehr), dann führt dies dazu, daß der abstützende Schenkel 8 des Gliedes 4 nicht mehr in der Lage verbleibt, in der er für den Winkelbereich 30° bis 45° in Fig. 3 eingezeichnet ist, sondern der abstützende Schenkel 8 des Gliedes 4 bewegt sich dann entlang dem geradlinigen Zwischenabschnitt 7 des Verbindungsschenkels 3 bis hinauf zu dem kreisabschnittförmig gerundeten Einmündebereich 6 des unteren Verbindungsschenkels 3 in den dortigen senkrecht nach oben verlaufenden geradlinigen Schenkel 2 des Aufhängeringes 1. In der dort ausgebildeten kreisabschnittförmigen Rundung des Einmündebereiches 6 nimmt der abstützende Schenkel 8 des Gliedes 4 dann wieder eine stationäre Lage ein, wie dies ebenfalls in Fig. 3 zeichnerisch dargestellt ist.

Der Anstellwinkel *δ* des geradlinigen Zwischenabschnitts 7 des unteren Verbindungsschenkels 3, der unter einem Winkel im Bereich von 50° bis 75° zur Längsmittellinie ***M-M*** des Aufhängeringes 1 angestellt ist, gewährleistet, daß bei einem Neigungswinkel von mehr als 45° der abstützende Schenkel 8 des Gliedes 4 nicht mehr in seiner bis dahin eingenommen Lage verbleibt, sondern unter Überwindung der auftretenden Reibung am unteren Verbindungsschenkel 3 entlang des geradlinigen Zwischenabschnitts 7 bis zur Einnahme der Position rutscht, die in Fig. 3 für den Winkelbereich 46° bis 60° angegeben ist. Die Einnahme einer Zwischenstellung am geradlinigen Zwischenabschnitt 7 in einer Position, wie sie etwa der mittleren Position der in Fig. 1 dargestellten Ausrichtungen (bei 45° Neigungswinkel) gezeigt ist, ist hier nicht möglich, weil der abstützende Schenkel 8 des Kettengliedes 4 (das meist aus demselben Material wie der Aufhängering 8 besteht) entlang des ganzen geradlinigen Zwischenabschnitts 7 gleitet und dabei nicht abstoppt.

## Patentansprüche

1. Aufhängering (1) für Mehrstranggehänge, umfassend zwei parallele geradlinige Schenkel (2), die an ihren jeweiligen Enden durch bogenförmige Verbindungsschenkel (3) miteinander verbunden sind, wobei der untere Verbindungsschenkel (3) zur Längsmittellinie (M-M) des Aufhängeringes (1) symmetrisch ausgebildet ist, im Mittelbereich (5) seiner Erstreckung sowie in den beiden Einmündebereichen (6) in jeden der beiden Schenkel (2) mit einer kreisabschnittförmigen Rundung verläuft, und auf der Innenseite des Aufhängeringes (1) die Radien (r₁, r₂) der Rundungen größer als der halbe Durchmesser (d) der Schenkel (2) sind und die Radien (r₂) der Rundungen an den Einmündungen des unteren Verbindungsschenkels (3) in die beiden Schenkel (2) kleiner als die halbe Innenweite (B) des Aufhängeringes (1) sind, ***dadurch gekennzeichnet,* daß** der Radius (r₁) des kreisabschnittförmigen Mittelbereiches (5) auf der Innenseite des Aufhängeringes (1) ebenfalls kleiner als die halbe Innenweite (B) des Aufhängeringes (1) ist und der Mittelbereich (5) an jedem seiner Enden mit dem dortigen kreisabschnittförmigen Einmündebereich (6) in den benachbarten Schenkel (2) über einen geradlinig verlaufenden Zwischenabschnitt (7) des Verbindungsschenkels (3) verbunden ist, der unter einem Winkel ( *δ* ) im Bereich von 50° bis 75° zur Längsmittellinie (M-M) des Aufhängeringes (1) angestellt ist.

2. Aufhängering nach Anspruch 1, **dadurch gekennzeichnet, daß** der Radius (r₁) der Rundung im Mittelbereich (5) des Verbindungsschenkels (3) 2,5-mal größer ist als der halbe Durchmesser (d) der Schenkel (2).

3. Aufhängering nach Anspruch 1, **dadurch gekennzeichnet, daß** die Radien (r₁, r₂) der kreisabschnittförmigen Rundungen im Mittelbereich (5) des Verbindungsschenkels (3) und in den Einmündungsbereichen (6) in die Schenkel (2) des Aufhängeringes (1) gleich groß sind.

4. Aufhängering nach einem der Ansprüche 1 bis 3, **dadurch gekennzeichnet, daß** die gerundeten Bereiche (5, 6) des Verbindungsschenkels (3) in einen sich anschließenden geradlinigen Abschnitt (2, 7) jeweils tangential einmünden.

5. Aufhängering nach einem der Ansprüche 1 bis 4, **dadurch gekennzeichnet, daß** jeder geradlinige Zwischenabschnitt (7) unter einem Winkel ( *δ* ) von 60° zur Längsmittellinie (M-M) des Aufhängeringes (1) angestellt ist.

6. Aufhängering nach einem der Ansprüche 1 bis 5, **dadurch gekennzeichnet, daß** der bogenförmige Verbindungsschenkel (3) über seine gesamte Länge hinweg zusätzlich gefräst ist.

## Claims

1. A suspension ring (1) for a multistrand lifting tackle, the suspension ring (1) comprising two parallel rectilinear legs (2), the respective ends thereof are connected to one another by arcuate connecting legs (3), wherein the lower connecting leg (3) is formed symmetrically with respect to the longitudinal center line (M-M) of the suspension ring (1), and extends as a curve shaped in form of a segment of a circle, both in the central region (5) of the lower connecting leg extent and in the two transition regions (6) in which the lower connecting leg (3) transits into the respective one of the two legs (2), and wherein on the inside of the suspension ring (1) the radii (r₁, r₂) of the curves are greater than half the diameter (d) of the legs (2) and the radii (r₂) of the curves at the transitions of the lower connecting leg (3) into the two legs (2) are smaller than half the internal width (B) of the suspension ring (1),
***characterized in* that** on the inside of the suspension ring (1) the radius (r₁) of the segment of circle shaped central region (5) is equally less than half the internal width (B) of the suspension ring (1), and, at each of its ends, the central region (5) is connected to the respective transitional region (6), which is segment of circle shaped and transits into the adjacent leg (2) there, via a rectilinear intermediate segment (7) of the connecting leg (3), which intermediate segment (7) is angled to the longitudinal center line (M-M) of the suspension ring (1) at an angle ( *δ* ) in a range of from 50° to 75°.

2. The suspension ring as claimed in claim 1, wherein in the central region (5) of the connecting leg (3) the radius (r₁) of the curve is 2.5 times greater than half the diameter (d) of the legs (2).

3. The suspension ring as claimed in claim 1, wherein in the central region (5) of the connecting leg (3) and in the transitional regions (6) transiting into the legs (2) the radii (r₁, r₂) of the segment of circle shaped curves of the suspension ring (1) are equal.

4. The suspension ring as claimed in one of claims 1 to 3, wherein the curved regions (5, 6) of the connecting leg (3) each transit tangentially into an adjoining rectilinear segment (2, 7).

5. The suspension ring as claimed in one of claims 1 to 4, wherein each rectilinear intermediate segment (7) is angled to the longitudinal center line (M-M) of the suspension ring (1) at an angle ( *δ* ) of 60°.

6. The suspension ring as claimed in one of claims 1 to 5, wherein the arcuate connecting leg (3) is additionally chamfered over its entire length.

## Revendications

1. Anneau de suspension (1) pour jeux de levage à plusieurs brins, comprenant deux branches rectilignes parallèles (2), qui sont reliées l'une à l'autre à leurs extrémités respectives par des branches de liaison arquées (3), la branche de liaison inférieure (3) étant configurée sous forme symétrique par rapport à la ligne médiane longitudinale (M-M) de l'anneau de suspension (1), s'étendant dans la zone médiane (5) de son extension ainsi que dans les deux zones d'embouchure (6) dans chacune des deux branches (2) avec un arrondi en forme de segment de cercle et, sur le côté intérieur de l'anneau de suspension (1), les rayons (r₁, r₂) des arrondis étant supérieurs à la moitié du diamètre (d) des branches (2) et les rayons (r₂) des arrondis aux embouchures de la branche de liaison inférieure (3) dans les deux branches (2) étant inférieurs à la moitié de la largeur intérieure (B) de l'anneau de suspension (1), ***caractérisé en* ce *que*** le rayon (r₁) de la zone médiane (5) en forme de segment de cercle sur le côté intérieur de l'anneau de suspension (1) est également inférieur à la moitié de la largeur intérieure (B) de l'anneau de suspension (1) et la zone médiane (5) est reliée à chacune de ses extrémités à la zone d'embouchure (6) en forme de segment de cercle locale dans la branche voisine (2) par l'intermédiaire d'une section intermédiaire (7) de la branche de liaison (3) qui s'étend sous forme rectiligne, qui est inclinée d'un angle (δ) dans la plage allant de 50° à 75° par rapport à la ligne médiane longitudinale (M-M) de l'anneau de suspension (1).

2. Anneau de suspension selon la revendication 1, **caractérisé en ce que** le rayon (r₁) de l'arrondi dans la zone médiane (5) de la branche de liaison (3) est 2,5 fois plus grand que la moitié du diamètre (d) des branches (2).

3. Anneau de suspension selon la revendication 1, **caractérisé en ce que** les rayons (r₁, r₂) des arrondis en forme de segments de cercle sont égaux dans la zone médiane (5) de la branche de liaison (3) et dans les zones d'embouchure (6) dans les branches (2) de l'anneau de suspension (1).

4. Anneau de suspension selon l'une quelconque des revendications 1 à 3, **caractérisé en ce que** les zones arrondies (5, 6) de la branche de liaison (3) débouchent chacune tangentiellement dans une section rectiligne (2, 7) consécutive.

5. Anneau de suspension selon l'une quelconque des revendications 1 à 4, **caractérisé en ce que** chaque section intermédiaire rectiligne (7) est inclinée d'un angle (δ) de 60° par rapport à la ligne médiane longitudinale (M-M) de l'anneau de suspension (1).

6. Anneau de suspension selon l'une quelconque des revendications 1 à 5, **caractérisé en ce que** la branche de liaison arquée (3) est en outre fraisée sur toute sa longueur.
